# EUROPEAN PATENT SPECIFICATION

(11) **EP 1 619 841 B1**
(45) Date of publication and mention of the grant of the patent: **30.05.2012**
(21) Application number: 04729273.5
(22) Date of filing: 23.04.2004
(51) Int. Cl.: H04L 12/58, G06F 13/00

(54) **COMMUNICATION METHOD, COMMUNICATION TERMINAL APPARATUS, COMMUNICATION SERVER APPARATUS, AND COMMUNICATION SYSTEM**
KOMMUNIKATIONSVERFAHREN, KOMMUNIKATIONSENDGERÄTEVORRICHTUNG, KOMMUNIKATIONSSERVERVORRICHTUNG UND KOMMUNIKATIONSSYSTEM
PROCEDE DE COMMUNICATION, TERMINAL DE COMMUNICATION, SERVEUR DE COMMUNICATION ET SYSTEME DE COMMUNICATION

(30) Priority: 25.04.2003 JP 2003122972
(43) Date of publication of application: 25.01.2006
(73) Proprietor: Vodafone Group PLC, Newbury Berkshire RG14 2FN (GB)
(72) Inventor: YAMAMURA, Takashi, 1056205 (JP); KANEGAE, Hiroshi, 1056205 (JP); ODA, Masahiro, 1056205 (JP)
(74) Representative: Sneary, Adrian Bernard
(86) International application number: PCT/JP2004/005919
(87) International publication number: WO 2004/098137

(56) References cited:
- EP-A1- 0 836 301
- WO-A2-01/77877
- WO-A2-99/65256
- JP-A- 2002 305 553
- JP-A- 2003 008 654
- JP-A- 2003 099 365
- US-A1- 2002 007 401

## Description

### TECHNICAL FIELD

The present invention relates to a communication method, a communication terminal, a communication server, and a communication system. More particularly, it relates to the communication method of communicating a message by using mail and so forth, the communication terminal and the communication server to use the communication method, and the communication system that uses the communication method.

### BACKGROUND ART

SMTP and POP3 are known as protocols to transceive a message on a network such as the Internet using TCP/IP, and they are widely used (for example, Jonathan B. Postel, "RFC-821", August 1982, Internet <URL: http://www.ietf.org/rfc /rfc0821.txt>, pp. 2-5, and J. Myers and M. Rose, "RFC-1939", May 1996, Internet <URL: http://www.ietf.org/rfc/rfc 1939.txt>, pp. 2-4).

In SMTP/POP3, a transmission message is transmitted from an apparatus placed in a transmitting-side to an SMTP server and transferred to the mail box of POP3 server placed on a receiving-side through the network. The receiver apparatus accesses the POP3 server to acquire the message from the mail box, and then deletes them from the mail box.

However, it is difficult for some cellular phone used in a mobile communication network to directly install an SMTP client and POP3 client because of restrictions on the performance, the memory capacity, or the transmission rate of radio channels of the MPU. Therefore, the following system providing the mail service to the cellular phone is known, wherein a gateway for SMTP/POP3 conversion is arranged between the cellular phone and the mail server to transmit the message by using a unique protocol, which applies a relatively low processing loads (for example, see Japanese unexamined patent publication No. 2001-197553 (pp. 8 to 10; Fig. 1)).

In the mail service, a short message representing the mail reception (that is, a reception notice of which size is 384 bytes or less) is transmitted to the cellular phone by using the unique protocol, when the POP3 server receives the message. The cellular phone requests the message to the mail server in response to an instruction from the user who has seen the reception notice displayed on the display unit of the cellular phone. Depending on the request, the mail server provides the message to the cellular phone.

On the other hand, there are also telecommunications enterprises or carriers, providing other mail service that handles the short message (that is, short mail of which size is 512 bytes or less) corresponding to the reception notice as the message text. Even in the third-generation digital mobile communication systems, the service to transmit the short message of which size is 140 octets at maximum (which is corresponding to 70 characters in 2-byte codes) to a cellular phone is defined (see, "3GPP TS 23.040 Technical realization of the Short Message Service (SMS)" and "3GPP TS 24.011 Point-to-Point (PP) Short Message Service (SMS) support on Mobile Radio Aspects").

To mutually transceive the message between the mail services of different specifications, the short mail is converted into the reception notice and is provided to the cellular phone. However, since the upper limit size (for example, 512 bytes) of the short mail is longer than the upper limit size (for example, 384 bytes) of the reception notice, the contents of the short mail may be lost partially when short mail is simply converted into the reception notice, for example, by limiting the size of the short mail to 384 bytes or less.

Accordingly, there is mentioned, for example, following procedure: if the size of the short mail is larger than the upper limit size of the reception notice, the short mail is converted into the reception notice to provide to the cellular phone, and the short mail is also saved in the mail server; and then, in response to a request from the cellular phone, the short mail saved in the server is provided to the cellular phone by using different protocol from that of the reception notice.

Alternatively, for example, the upper limit size of the message is set to the size of about 12 k bytes, considering the capacity of the memory on the cellular phone side, even when the standard protocol such as POP3 is installed in the cellular phone.

In POP3, the message held in the server is generally deleted, when the client receives the message. Therefore, when the cellular phone is trying to receive the message having the larger size than the predetermined upper limit of the message size, a part of message that beyond the upper limit is automatically deleted without being transmitted to the cellular phone. As a result, the part of the message of which size over the upper limit size is lost.

Accordingly, the message having the larger size than the predetermined upper limit size of the reception notice must be stored in the mail server, similarly to the short mail to be provided to the cellular phone by using the protocol other than POP3.

Furthermore, a mail providing apparatus that can limit to receive the mail is also known. The mail providing apparatus can limit to receive the message having larger size than the upper limit size defined for the cellular phone, or that attached the file unusable in the cellular phone (see, for example, Japanese unexamined patent publication No. 2002-344526 (p. 13; Figs. 12 and 13)). In the mail providing apparatus disclosed in the publication, however, it is not considered for the user to choose the message to be received or reception method optionally.

Another service, which converts a message into a page description language to provide it to a cellular phone, is known (see, for example, Japanese unexamined patent publication No. 2002-344526 (p. 13; Figs. 12 and 13)). In the service disclosed in the publication, when the message size beyond the upper limit, it is divided into a plurality of messages each having smaller size than the upper limit, and to be converted into the page description language to be transmitted to the cellular phone.

Document EP 0836301 discloses a system for delivering emails from an email server to a recipient. The email server sends an alert to the recipient to indicate that mails to be delivered are waiting, the alert comprising a summary of the emails, e.g., name of sender, title, summary of email text. The recipient sends back a selection signal to the email server, indicating where the emails should be sent to. The email server then sends the emails to the selected destination.

Furthermore, IMAP is known as an advanced protocol of POP3 (see, for example, 'M. Crispin, "RFC-2060", December 1996, Internet <URL: http://www.ietf.org/rfc/rfc2060.txt>, pp. 4-7'). In the protocol, prior to transmit the message stored in a mail box to the terminal apparatus side, the following things are possible: information of the capacity or a subject of the message can be requested, and instruction for checking, deleting, or transferring an attached file per part of a message with a multipart MIME (Multipurpose Internet Mail Extension) format.

However, when the short mail having the file size beyond the upper limit of the reception notice is held in the mail server as described above, the user must acquire them from the mail server by operating the cellular phone, and the loads for the user is heavy.

In the case of the system in which the message having the file size beyond the upper limit is (automatically) divided to provide to the cellular phone as described above, the message is automatically divided on the mail server side and transmitted to the cellular phone. Therefore, the message unnecessary for the user is also provided to the cellular phone so that undesired traffic and cost are generated.

The present invention has been made in consideration of the situations as described above, and the object of the present invention is to provide the communication method capable of efficiently transmitting the message information with reducing unnecessary traffic.

Another object of the present invention is to provide the communication terminal and the communication server that can be used to use the communication method of the present invention.

Still another object of the present invention is to provide the communication system capable of using the communication method of the present invention.

### DISCLOSURE OF THE INVENTION

In the first aspect, the present invention is the mail communication method for executing communication by using the communication terminal via the communication server, comprising steps of: transmitting the reception notice from the communication terminal to the communication server, the reception notice representing that message information to be transmitted to the communication terminal is received; transmitting the digest request from the communication terminal to the communication server in response to the reception notice, the digest request being parameterized with digest component information about an information component required as a digest of the message information; composing digest information in the communication server on a basis of the digest component information in response to the digest request; and transmitting the composed digest information to the communication terminal.

In the communication method, when the communication server receives the message information to be transmitted to the communication terminal, it transmits the reception notice to the communication terminal in the reception notice step, wherein the reception notice shows that the message information is received by the server. The communication terminal received the reception notice transmits the digest request to the communication server, in the digest request step, wherein the digest request containing the digest component information that shows the information composition desired message digest as parameters. As information, there is mentioned, for example, those designated at least one of optional elements comprising the transmission source, the destination, the text size, the presence or absence of the attached files, the type of the attached files, and the size of the attached file, when the message information has an e-mail format (it is simply referred to as a "mail" in this specification) according to SMTP or POP3.

Next, the communication server received the digest request inspects the message information in response to the digest request to compose digest information designated by the digest information component information in the digest information notice step. Next, the communication server transmits the composed digest information to the communication terminal.

As a result, the communication terminal may obtain the desirable digest information for the message information addressed to itself. Therefore, the message information may be transmitted efficiently by referring to the digest information, and prepared for receiving the message information in a manner to reduce unnecessary traffic. Hence, according to the communication method of the present invention, the message information may efficiently be transmitted, and unnecessary traffic may be reduced.

In the communication method of the present invention, the digest component information may be set in the communication terminal previously. In this case, the communication terminal may automatically work, after receiving the reception notice.

Alternatively, in the communication method of the present invention, the digest component information may be created in accordance with an instruction from a user of the communication terminal prior to the digest request step. In this case, the digest information convenient for the user of each communication terminal can be obtained. Note that in order to send the digest request automatically, the digest component information is created in accordance with a user's instruction may be previously registered in the communication terminal; or in order to send it manually, the digest component information can be created depending on the user's instruction after receiving each reception notice.

Furthermore, the communication method of the present invention may further comprise steps of: transmitting the partial message transmission request from the communication terminal received the digest information to the communication server, wherein the partial message transmission request is accompanied by the partial designation parameter in each partial component of the message information required to be received; and transmitting the partial component designated by the partial designation parameter from the communication server to the communication terminal in response to the partial message transmission request.

In this case, the communication terminal received the digest information transmits the partial message transmission request, which is accompanied by the part designation parameter, to the communication server in the partial message transmission request step. The partial message transmission request is sent each of the part to be desirably received, for example, the part having the receivable size in single communication operation. The communication server received the partial message transmission request transmits the part designated by the part designation parameter accompanying to the partial message transmission request to the communication terminal in the partial message notice step. As a result, the communication terminal may selectively receive solely the desired part of the message information.

The partial message transmission request may be further accompanied by the partial message deletion request parameter to request the deletion of the partial component designated by the partial designation parameter. In this case, the communication server may recognize that the part transmitted to the communication terminal can be deleted by using the partial message transmission request accompanied by the partial message deletion request parameter. Accordingly, the communication server may delete the part designated by the part designation parameter immediately after it transmitted the designated part to the communication terminal.

The communication method of the present invention may further comprise the steps of: transmitting a whole message transmission request to the communication server when a size of the message information is smaller than a maximum size receivable by the communication terminal at once, wherein the whole message transmission request is a transmission request for whole components of the message information; and transmitting the whole components of the message information from the communication server by the communication server, in response to the whole message transmission request.

In this case, the communication terminal transmits the whole message transmission request to the communication server, when it is clarified that the size of the message information is smaller than the maximum size that is receivable for the communication terminal in one time, depending on the digest information; wherein the whole message transmission request is defined as the request for transmitting entire message information. As a result, when the size of the message information is smaller than the maximum size, the whole message information may be fully acquired by sending the whole message transmission request only one time.

Wherein, the whole message transmission request may be further accompanied by a whole message deletion request parameter to request the deletion of the whole of the message information. In this case, the communication server may recognize that the part transmitted to the communication terminal can be deleted by using the partial message transmission request accompanied by the partial message deletion request parameter. Accordingly, the communication server may delete the part designated by the part designation parameter immediately after it transmitted the designated part to the communication terminal.

In the second aspect, the present invention is the communication terminal for executing communication via the communication server, comprising: digest component information storage means for storing digest component information about an information component required as the digest of message information, which is received by the communication server, and to be transmitted to the communication terminal; digest request means for transmitting a digest request to the communication server that transmits the digest request being taken digest component information as a parameter to the communication server, in response to the reception notice of the message information to be transmitted to the communication terminal; and digest reception means for receiving digest information transmitted from the communication server in response to the digest request.

In this communication terminal, the digest request means transmits the digest request to the communication server, in response to the message information reception notice sent from the communication server; wherein the digest request is taken the digest component information, which is stored in the digest component information storage means, as a parameter. The digest component information may be stored as that previously determined before receiving the reception notice, or that determined according to the instruction from the user after receiving the reception notice.

Then, the digest reception means receives digest information transmitted from the communication server, in response to the digest request.

Accordingly, the communication terminal of the present invention may complete the digest acquisition function, which is needed to the communication terminal when the communication method of the present invention is used. By this, the communication terminal may be employed in use of the communication method of the present invention.

The communication terminal of the present invention may further comprise: digest display means for displaying the received digest information. In this case, the received digest information is displayed on the display unit to be notified to the user.

The communication terminal may further comprise: partial message request means for transmitting a partial message transmission request to the communication server in accordance with instructions from the user who has seen the digest information displayed on the digest display means, wherein the partial message transmission request including a partial designation parameter in each partial component of the message information required to be received; and message reception means for receiving the partial component of the message information transmitted from the communication server, in response to the partial message transmission request.

In this case, the partial message request means transmits the partial message transmission request to the communication server, pursuant to the instruction from the user who saw the digest information displayed on the digest display means; wherein the partial message transmission request is accompanied by the part designation parameter to designate the desirable partial message for the user to be received. The desired part to be received is decided by the user, depending on the size of each part of the message information and so forth.

The message reception means receives the part of the message information transmitted from the communication server, in response to the partial message transmission request. Accordingly, the message reception means may partially acquire the message information designated by the instruction from the user after receiving the reception notice.

The communication terminal of the present invention may further comprise: partial designation information storage means for storing partial designation information to designate at least one partial component of the message information required to be received when the partial designation information is present in the message information; partial message request means for transmitting the partial message transmission request to the communication server based on both of the partial designation information and the digest information in each partial component of the message information required to be received, wherein the partial message transmission request is accompanied by the partial designation parameter; and message reception means for receiving the partial component of the message information transmitted from the communication server in response to the partial message transmission request.

In this case, the partial message request means transmits the partial message transmission request accompanied by the part designation parameter to the communication server, depending on the following information: the part designation information and the received digest information. The partial message transmission request is sent for every part of the message information that is desirable to be received. The part of the message information to be received corresponds to the part satisfies following requirements: the part is designated in the part designation information, and it is indicated by the digest information that the part is present in the message information. Note that the part to be received may be determined also in consideration of the size of each part indicated by the digest information.

Then, the message reception means receives the part of the message information transmitted from the communication server, in response to the partial message transmission request. Accordingly, the message reception means may automatically acquire the desired part of the message information.

The communication terminal of the present invention may further comprise: whole message transmission request means for transmitting the whole message transmission request to the communication server when the size of the message information is smaller than the maximum size receivable at once, wherein the whole message transmission request is the transmission request for whole components of the message information; and message reception means for receiving the whole components of the message information transmitted from the communication server in response to the whole message transmission request.

In this case, the whole message request means transmits the whole message transmission request, which requires to transmit the whole message information, to the communication server, when it is clarified that the size of the message information is smaller than the maximum size for the communication terminal to receive in one time, depending on the digest information. Then, the message reception means receives the whole message information transmitted from the communication server, in response to the whole message transmission request. Accordingly, the message receiving means may fully acquire the whole message information by sending single whole message transmission request, when the size of the message information is smaller than the maximum size for the communication terminal to receive in one time.

The communication terminal of the present invention may further comprise wireless communication means for executing wireless communication with base stations of the mobile communication network, wherein the base stations are arranged in a communication path to the communication server. That is, the communication terminal of the present invention may be the mobile communication terminal such as the cellular phone.

According to the third aspect, the present invention is the communication server for assisting communication by a communication terminal, comprising: reception notice means for transmitting the reception notice to the communication terminal, wherein the reception notice represents that message information to be transmitted to the communication terminal is received; and digest information notice means for composing digest information on a basis of digest component information, in response to the digest request transmitted from the communication terminal, and transmitting the composed digest information to the communication terminal; wherein the digest request is taken the digest component information for the information component that is required as the digest of the message information as the parameter..

In this communication server, when the message information to be transmitted to the communication terminal is received, the reception notice means transmits the reception notice showing that it received the message information to the communication terminal. Then, the digest information notice means, which received the digest request transmitted from the communication terminal in response to the reception notice, composes the digest information depending on the digest component information accompanied by the digest information. Then, the digest information notice means transmits the composed digest information to the communication terminal.

Accordingly, the communication server may attain the digest acquisition function, which is needed to the communication terminal when the communication method of the present invention is used. Therefore, the communication server may be employed in use of the communication method of the present invention.

The communication server of the present invention may further comprise partial message transmission means for transmitting the partial component of the message information to the communication terminal for each of the partial component of the message information required for being received by the communication terminal, in response to the partial message transmission request transmitted from the communication terminal. Wherein, the partial component is designated by the partial designation parameter, and the partial message transmission request is accompanied by the partial designation parameter.

In this case, when the server received the partial message transmission request transmitted from the communication terminal, which has received the digest information, the partial message transmission means transmits the part of the message information to the communication terminal. Wherein, the part of the message information is designated by the partial designation parameter accompanied by the partial message transmission request. As a result, the desired part to be received by the communication terminal may be provided to the communication terminal.

The apparatus may further comprise partial message deletion means for deleting the partial component after transmission by the message part transmission means, when the partial message transmission request further includes the partial message deletion parameter to request the deletion of the partial component designated by the partial designation parameter. In this case, the partial message deletion means deletes the part designated by the part designation parameter after transmission by the partial message transmission means, when the partial message request accompanied by the partial message deletion parameter, which request the communication server to delete the part. Accordingly, the communication server may immediately delete the part after transmission by the partial message transmission means.

The communication server of the present invention may further comprise whole message transmission means for transmitting whole components of the message information in response to a whole message transmission request transmitted from the communication terminal; wherein the whole message transmission request is a transmission request for the whole components of the message information.

In this case, when the server received the whole message transmission request transmitted from the communication terminal, which has received the digest information, the whole message transmission means transmits the whole message information to the communication terminal. As a result, the entire of the message information may be transmitted to the communication terminal by sending the whole message transmission request in one time.

The apparatus may further comprise whole message means for deleting the whole components of the message information after transmission by the partial message transmission means, when the whole message transmission request is further accompanied by the whole message deletion parameter to request deletion of the whole components of the message information. In this case, the whole message deletion means deletes the whole message information after transmission by the partial message transmission means, when the whole message request is accompanied by the whole message deletion parameter, which request the communication server to delete the whole message information. Accordingly, the communication server may immediately delete the whole message information after transmission by the whole message transmission means.

According to the fourth aspect, the present invention is the communication system wherein the communication terminal comprises: digest component information storage means for storing digest component information for the information component required as a digest of message information, which is received by the communication server to be transmitted to the communication terminal; digest request means for transmitting a digest request to the communication server, in response to the reception notice of the message information, which is sent from the communication serve, to be transmitted to the communication terminal, wherein the digest request is taken the digest component information as the parameter; and digest reception means for receiving digest information transmitted from the communication server, in response to the digest request, and the communication server comprises: reception notice means for transmitting the reception notice, which shows that the message information to be transmitted to the communication terminal is received, to the communication terminal; and digest information notice means for composing the digest information on a basis of the digest component information, in response to the digest request transmitted from the communication terminal, wherein the digest request is taken the digest component information for the information component required as the digest of the message information as the parameter, to transmit the composed digest information to the communication terminal.

That is, the communication system of the present invention comprises the communication apparatus and the communication server of the present invention. Therefore, the communication system of the present invention may use the above-described communication method of the present invention. According to the communication system of the present invention, the system of the present invention may transmit the message information efficiently, reducing unnecessary traffic.

As described above, according to the communication method and communication system of the present invention, the message information may be transmitted efficiently, and unnecessary traffic may be reduced.

### BRIEF DESCRIPTION OF THE DRAWINGS

Fig. 1 is a block diagram showing the configuration of the information communication system according to an embodiment of the present invention;
Fig. 2 is a block diagram showing the configuration of the mail server shown in FIG. 1;
Fig. 3 is a block diagram showing the configuration of the mobile communication network comprised in the information communication system shown in FIG. 1;
Fig. 4 is a block diagram showing the structure of the e-mail client and memory in the cellular phone shown in FIG. 1;
Fig. 5 is a view showing an example of the message transmitted in the information communication system shown in Fig. 1;
Fig. 6 is a view showing the example of the digest information provided to the cellular phone shown in Fig. 1;
Fig. 7 is a view showing the example of the information representing the MIME structure of the message;
Fig. 8 is a view showing the example of the response message when the reception of the attached file of the message is requested;
Fig. 9 is a table showing the example of the setting information (a part of operation mode information containing the digest component information) stored in the setting holding unit of the cellular phone shown in Fig. 1;
Fig. 10 is a view showing the example of the display image on the display unit when the setting information (the digest component information) is to be set;
Fig. 11 is a table showing the example of the setting information (the reception item information) stored in the setting holding unit of the cellular phone shown in Fig. 1;
Fig. 12 is a table showing the example of the management table stored in the management table holding unit of the cellular phone shown in Fig. 1;
Fig. 13 is a sequence chart showing the example of the manual reception operation;
Fig. 14 is a sequence chart showing the example of the operation of the proxy server 22 in the manual reception mode;
Figs. 15A and 15B are views showing examples of images displayed on the display unit in the manual reception operation;
Fig. 16 is a sequence chart showing the example of the automatic reception operation; and
Fig. 17 is a block diagram showing the modification of the mail server formed by POP3.

### BEST MODE FOR CARRYING OUT THE INVENTION

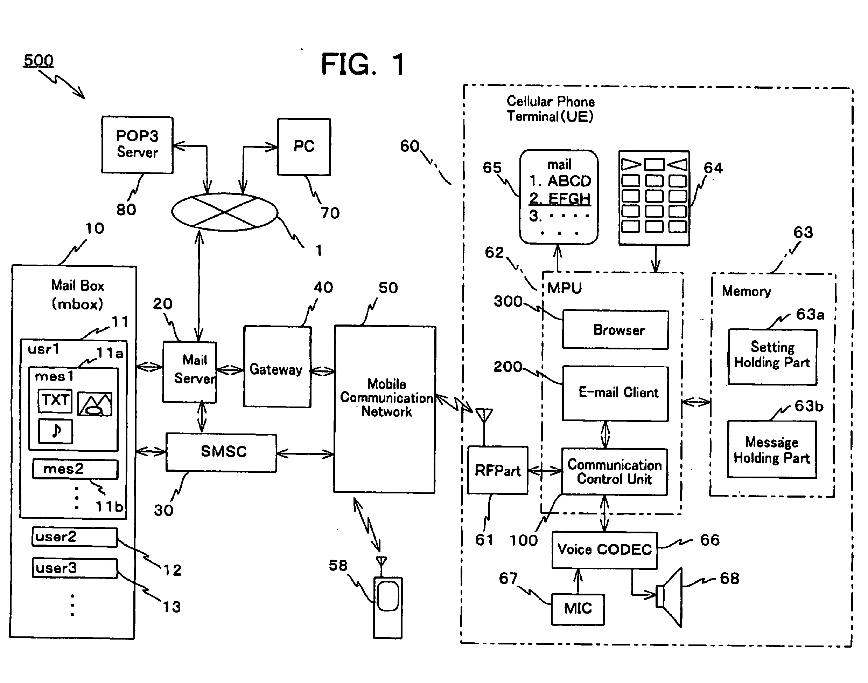

An embodiment of the present invention will be described below with reference to Figs. 1 to 16. The same reference numerals denote the same or similar elements throughout the drawings, and a repetitive description thereof will be omitted.

### (Configuration)

Fig. 1 is the block diagram showing the schematic configuration of the communication system 500 according to the present embodiment. As shown in Fig. 1, the communication system 500 comprises (a) the mail server 20 that is the communication server to transceive the messages between the network 1, which communicates by using the TCP/IP protocol such as the Internet, and manage the messages in the mail box (mbox) 10 and (b) the Short Message Service Center (SMSC) 30 which transmits short messages to the communication terminal, the cellular phone 60. The communication system 500 also comprises (c) the gateway 40 that converts protocols and so forth, (d) the mobile communication network 50 which performs wireless communication with the cellular phone 60, and (e) the cellular phone (UE) 60. The communication system 500 further comprises (f) the information communication terminal (PC) 70 such as a personal computer connected to the network 1, and (g) the POP3 (Post Office Protocol version 3) server 80.

The mail box (mbox) 10 has the storage areas for the users 11, 12, 13, and so forth to store received mails for respective users (user 1, user 2, user 3, and so forth). As representatively shown in the Fig. 1 that shows the storage means for the user, messages such as mes 1, mes 2, and so forth each of that comprises at least one of the data selected from the group comprising the text data, image data, audio data, and so forth, in which these data are respectively stored in the storage areas for the user 11, 12, 13, and others.

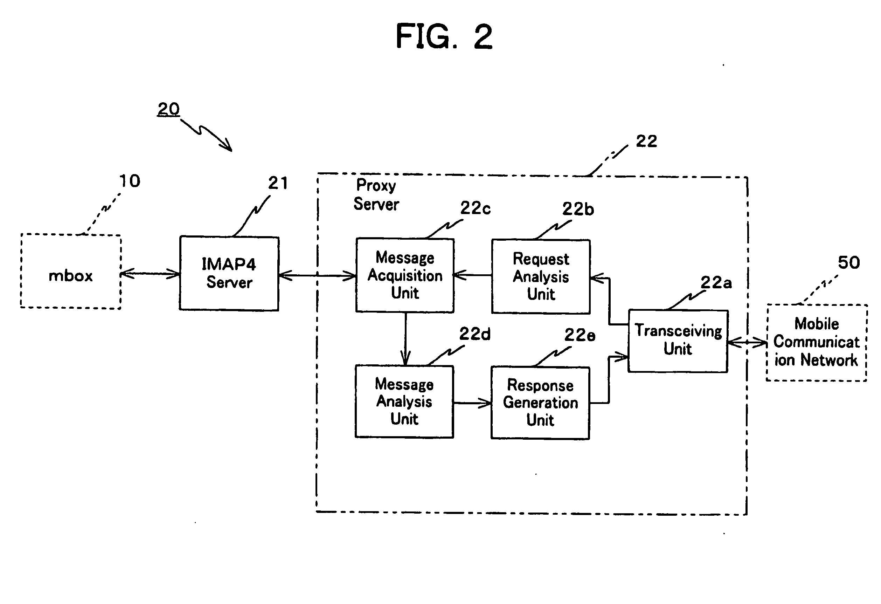

As shown in Fig. 2, the mail server 20 comprises the IMAP4 (Internet Message Access Protocol version 4) server 21. When the IMAP4 server 21 works, the messages are transceived between other mail server (POP3 server 80) and PC (Personal Computer) 70 that are connected through the network 1 by IMAP. Prior to transfer the message stored in the mbox 10 to the terminal side, the IMAP4 server 21 may request the information for the capacity or the subject of the message, or instruct to confirming the absence or presence of the attached file, deleting or transferring of them for every part of the multipart MIME (Multipurpose Internet Mail Extension) messages.

On the other hand, IMAP4 is not installed in the cellular phone 60 (Fig. 1) because of MPU processing capacity, memory capacity, and so forth. Therefore, the mail server 20 comprises the proxy server 22, which generates IMAP command to provide to the IMAP4 server 2, in response to the request from the cellular phone 60. As shown in Fig. 2, the proxy server 22 comprises (i) the transceiving unit 22a which transceives the command between the cellular phone 60, (ii) the request analysis unit 22b which analyzes the request from the cellular phone 60, (iii) the message acquisition unit 22c which acquires the message from the IMAP4 server 21, (iv) the message analysis unit 22d which analyzes the message acquired by the message acquisition unit 22c, and (v) the response generation unit 22e which generates the response message to the cellular phone 60.

When the IMAP4 server receives the message addressed to the user of the IMAP4 server 21 from an external mail server, it stores the received message in the assigned area to the user in the mail box (mbox) 10 (for example, the user storage area 11 for user 1). The mail server 20 instructs the SMSC 30 (Fig. 1) to transmit a short message that message is received by the server 21 as the reception notice to the cellular phone 60, which is the destination of the received message.

The IMAP4 server 21 manages received messages by giving unique identification numbers (UID: Unique ID) to them. Instructions to the IMAP4 server 21, for example, the request of message transmission from the IMAP4 server 21 and so forth, are performed by designating the UID.

Referring back to Fig. 1, the SMSC 30 transmits the short message, for example, of which size is about 140 octets (70 characters in 2-byte characters) to the cellular phone 60. Different from the message sent from the IMAP4 server 21, the short message is transmitted by using protocol other than the TCP/IP protocol to supply to the cellular phone 60.

The gateway 40 performs processing such as the packet header conversion or the segmentation/reassembly of data in the packet, thereby executing the conversion between the TCP/IP protocol and the transmission protocol on the mobile communication network 50.

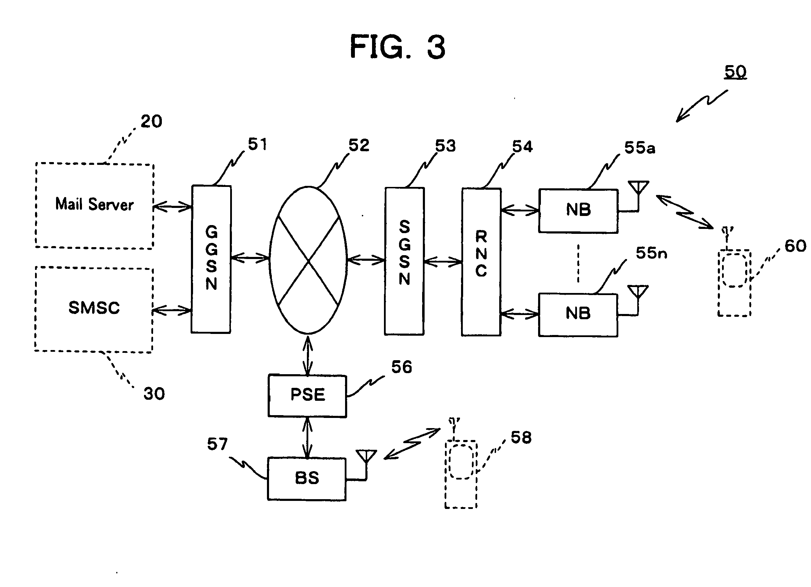

The mobile communication network 50 comprises the digital wireless communication network that employs W-CDMA (Wideband Code Division Multiple Access) system as the wireless access system and GPRS (General Packet Radio Service) system as the core network system. As shown in Fig. 3, the mobile communication network 50 comprises (i) the GGSN (Gateway GPRS Support Node) 51, the network 52, and the SGSN (Serving GPRS Support Node) 53, which composes the core network (CN), and (ii) the RNC (Radio Network Controller) 54 and the base station apparatuses (NB: NodeB) 55a, 55b,..., 55n, which composes the wireless access network. The mobile communication network 50 also comprises the base station (BS) 57 which communicates wirelessly between the packet exchanger (PSE) 56 connected to the network 52, and the cellular phone 58 (see, Fig. 1) having packet communication functions, so-called 2.5th-generation of the terminal.

When the cellular phone 60 performs the packet communication, the logical connection is set between the GGSN 51 and the SGSN 53 connected to the RNC 54, which locates in higher rank than the base station 55a to 55n communicating with the cellular phone 60. The logical connection is maintained even when the cellular phone 60 moves to other cells of the base station 55a to 55n under the SGSN 53 during communication. As the protocol to control the logical connection, for example, GTP (GPRS Tunneling Protocol) may be used. Note that new logical connection is set between the SGSN 53 in the higher rank of the new cell, when the cellular phone 60 moves to other cells of the base station 55a to 55n under other SGSN 53.

The cellular phone 60 comprises (i) the RF (Ratio Frequency) unit 61 that processes a high-frequency signal, (ii) the processing unit (MPU) 62, and (iii) the memory 63. The cellular phone 60 also comprises (iv) the operation keys 64 to input the instructions from users, and (v) the display unit 65 to display for the user. The cellular phone 60 further comprises (vi) the voice CODEC 66 which encodes/decodes voice signals, (vii) the microphone (MIC) 67, and (viii) the speaker 68.

The MPU 62 functions as the communication control unit 100 to control the communication through the mobile communication network 50, the e-mail client 200 to transceive e-mail, and the browser 300 to display the e-mail message and so forth by executing a control program held in the memory 63. The memory 63 comprises the setting holding unit 63a for holding the setting information and the message holding unit 63b for holding the message.

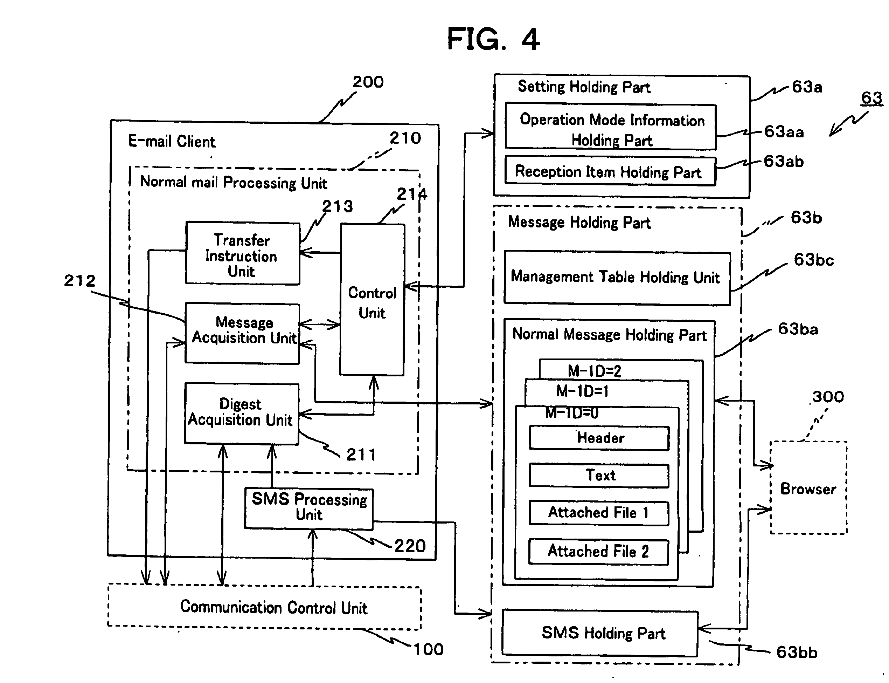

As shown in Fig. 4, the e-mail client 200 comprises the normal mail processing unit 210 and the SMS processing unit 220; wherein the unit 210 uses the mail service provided by the mail server 20, and the unit 220 uses the short mail service provided by the SMSC 30 as described above.

The normal mail processing unit 210 comprises (i) the digest acquisition unit 211 which requests the information (digest information) for the message of the mail server 20, and (ii) the message acquisition unit 212 which acquires the message from the mail server 20. The normal mail processing unit 210 also comprises (iii) the transfer instruction unit 213 which transmits the following instruction to the mail server 20: for example, transferring or deleting the entire message (it may be possible for partial processing per the header, the text, or the attached file), and (iv) the control unit 214 which controls the operations of the digest acquisition unit 211, the message acquisition unit 212, and the transfer instruction unit 213 depending on the setting information held in the setting holding unit 63a.

The setting holding unit 63a comprises (i) the operation mode information holding unit 63aa which holds the following information as operation mode information: the maximum size of the message receivable by the cellular phone 60 and digest component information to designate desirable components of the digest information, and (ii) the reception item holding unit 63ab which holds reception item information to designate items (parts) in the message to be received. The message holding unit 63b comprises (i) the normal message holding unit 63ba which holds the message from the mail server 20, (ii) the SMS holding unit 63bb which holds the short message from the SMSC 30, and (iii) the management table holding unit 63bc which holds the management table for messages in the holding units 63ba and 63bb.

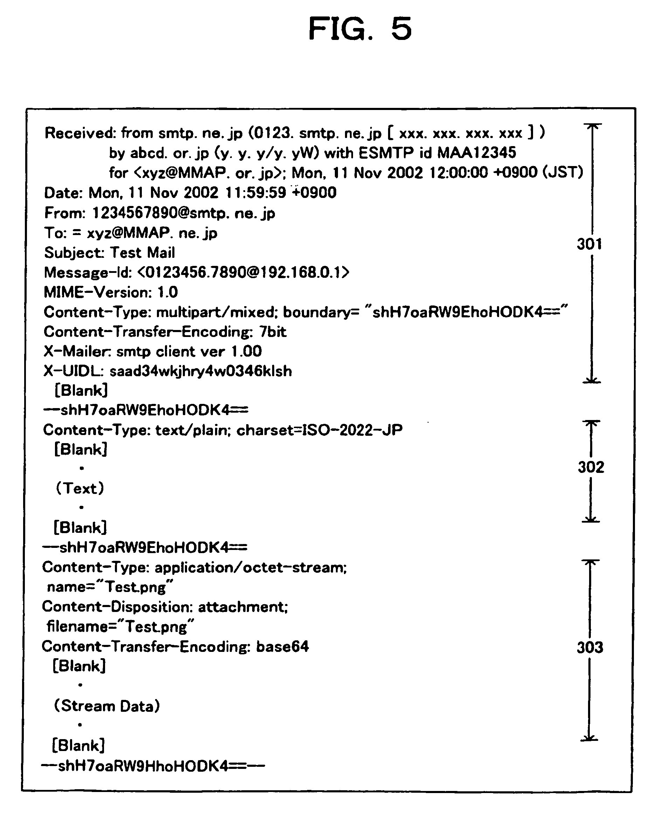

E-mail received by the mail server 20 through the network 1 (Fig. 1) includes the header 301 containing information such as a message transmission path, a transmission date and time, a sender, a destination, a title, and message ID, the text 302, and the attached file 303, as shown in Fig. 5 as examples.

In the communication system 500, the size of one message to be received by the e-mail client 200 is limited to as follows: for example, 140 octets for the short message, and 30 kbytes for the normal message including the header. On the other hand, the message received by the mail server 20 is provided not only to the cellular phone 60 but also other terminals through the network 1. Therefore, the message may have the size larger than the upper limit size of the short message or the message in the e-mail client 200.

Accordingly, in the communication system 500, the reception notice is transmitted to the cellular phone 60 firstly by using the short mail. In response to the notice, the e-mail client 200 requests the digest information of the message of the mail server 20. Depending on the acquired digest information and the setting information held in the setting holding unit 63a, the normal mail processing unit 210 requests the header, the text, and the attached file of the mail server 20.

Digest information, which is the request for transmitting from the mail server by the digest acquisition unit 211 of the e-mail client 200, may contain, the following things: for example, UID, and the text size, the title (the subject:), the destination (To:), the transmission date and time, the significance, the presence or the absence of the attached file, and the format or size of the attached file for the message corresponding to the UID. The IMAP4 server 21 may supply just necessary parts specified in the information for the message stored in the mail box (mail box (mbox) 10 shown in Fig. 1) as digest information, in response to a request from the client.

The setting holding unit 63a holds the information (for example, the text size only, or the text size and the flag indicating the presence or absence of the attached file) designated by the digest component information, which is accompanied by the digest request notified from the cellular phone 60 to the mail server 20 as parameters. The digest acquisition unit 211 requests the proxy server 22 of the mail server 20 so as to transmit the necessary information in the digest information, according to the setting information set in the setting holding unit 63a. In response to the request, the proxy server 22 generates IMAP command to supply to the IMAP4 server 21.

As described above, in IMAP4, parts of the information (the digest information) for the message, for which is requested of the mail server 20, may be designated by designating parameters of FETCH command that is defined in RFC-2060. For example, when either of the command "FETCH 1 BODY [HEADER]" or "FETCH 1 RFC822. HEADER" is transmitted to the mail server 20, the header part of the first message in the mbox 10 may be solely acquired as its response. Alternatively, the message size may be acquired as the response, when the command "FETCH 1 RFC822. SIZE" is sent. Furthermore, the information representing the MIME structure (for example, the number and the size of the attached files, as well as the text) of the first message stored in the mbox 10 may be acquired by using either of the command "FETCH 1 BODYSTRUCTURE" or "FETCH 1 BODY".

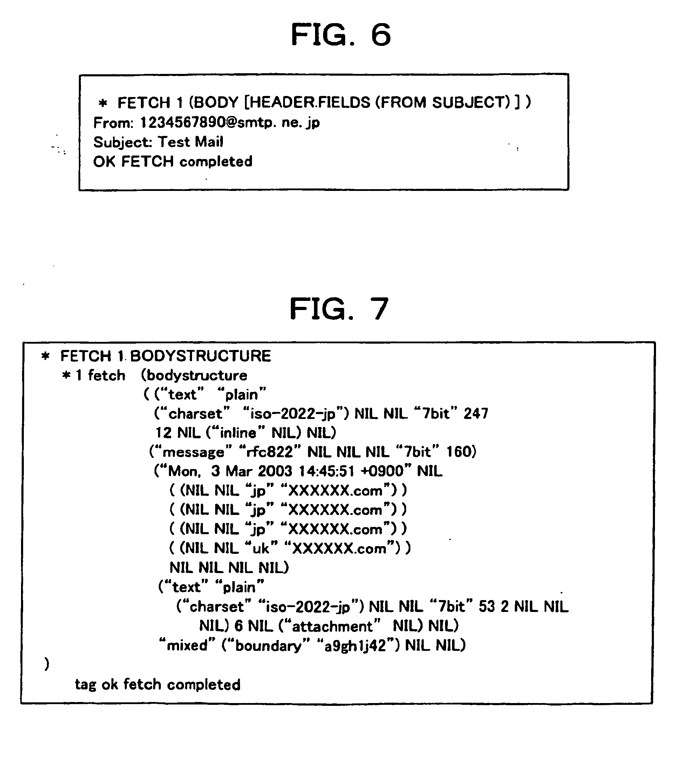

More specifically, for example, when the message shown in Fig. 5 is the first message stored in the mbox 10 and the command "FETCH 1 BODY [HEADER. FIELDS (FROM SUBJECT)]" is transmitted to the mail server 20, the response (digest information) is the information showing the contents of the From field and Subject field in the header 301, as shown in Fig. 6.

When the command "FETCH 1 BODYSTRUCTURE" is transmitted to the mail server 20 under the similar condition to the above-mentioned one, the information representing the MIME structure of the message is provided to the message acquisition unit 212 as the response (the digest information), for example, as shown in Fig. 7.

In IMAP, the processing such as requesting, deleting, or transferring the message may be designated per part of the message. Therefore, for example, when the message received by the mail server 20 has the multipart MIME (Multipurpose Internet Mail Extension) format, the normal mail processing unit 210 may request the transmission of each part (for example, the text or the attached file) of the message from the mail server 20; namely, the partial message request accompanying the partial message request parameter to designate the desired partial message may be sent.

In requesting the processing, for example, the normal mail processing unit 210 transmits the command such as the reception, the transfer, or the deletion to the proxy server 22. The parameters of the command include UID representing the message of the interest of the command and the information [for example, the part number such as "2.1" equivalent to the MIME structure] representing the interest of the message part. The analysis unit 22b in the proxy server 22 analyzes the command and parameters provided from the normal mail processing unit 210, and sending the instruction to the message acquisition unit 22c to generate IMAP command corresponding to the command and the parameters to transmit to the IMAP4 server 21.

When the response to the IMAP command from the IMAP4 server 21 is received, the message analysis unit 22d instructs the response generation unit 22e to generate the response message corresponding to the response to transmit the response message to the normal mail processing unit 210 through the transceiving unit 22a. By this, even when IMAP4 protocol is not installed in the cellular phone 60, the processing such as the receiving, the transferring, or the deleting for each part of the message may be performed.

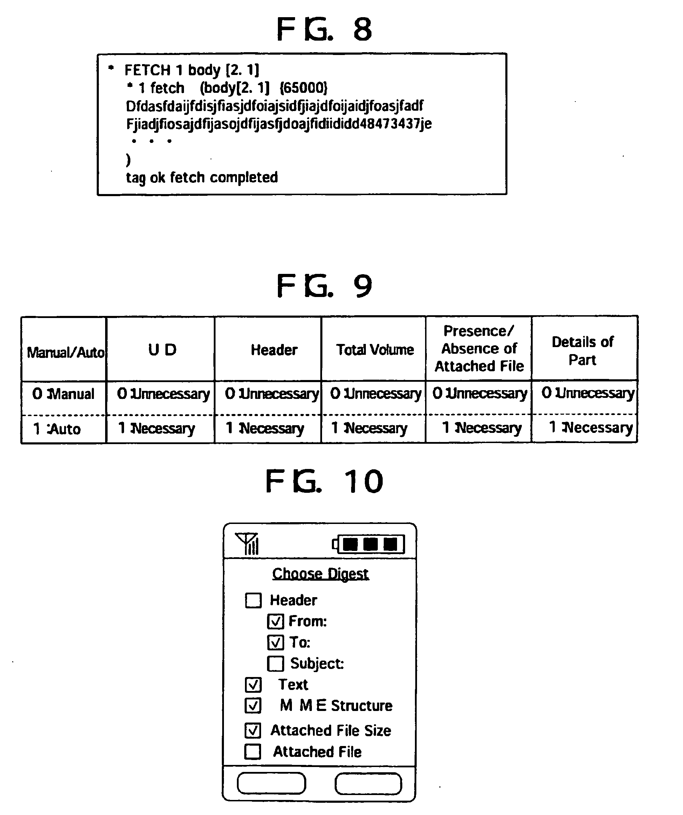

More specifically, for example, the partial message to be required to the mail sever 20 may be designated by designating the parameters of FETCH command when the IMAP command is employed. For example, when the command, "FETCH 1 RFC822. HEADER" is used, the header part of the message may be solely requested. Alternatively, when either command, "FETCH 1 (RFC822. HEADER RFC822. TEXT)" or "FETCH 1 BODY [HEADER TEXT]" is used, both of the header part and the text of the message may be requested. For example, in order to solely receive the attached file (2.1) of the message (message ID = 1), FETCH command having the parameter "body [2.1]", which indicates the attached file, is transmitted, as shown in Fig. 8. As a response to the command, the data of the attached file is provided as shown in Fig. 8 as the example.

Note that the request of the transmission per part from the mail server 20 may be performed automatically, or depending on the instruction from the user who has checked the digest component information, when the total message size exceeds the upper limit size of one message as described above. Alternatively, these operations may be switched in accordance with the setting by the user.

In order to implement the operation switching according to the setting by user, the operation mode information holding unit 63aa in the setting holding unit 63a may be set the followings as the operation mode information: the maximum receivable size of a message and digest component information to designate desired components of digest information. Items (parts) in the message to be desirable received are set in the reception item holding unit 63ab in the setting holding unit 63a.

As the digest component information, for example, flags to designate detailed information of each part such as the identification information assigned to each message header (UID), the total capacity of the message, the presence or the absence of the attached file by the MIME structure, the text size, and the attached file size may be set, as shown in Fig. 9. The digest acquisition unit 211 requests the mail server 20 to transmit digest information depending on the flags.

For example, each information to be requested as the digest information, namely, the digest component information may be set by displaying selectable contents of the digest information on the display unit 65 and by inputting the instruction from the user, by using the operation keys 64, as shown in Fig. 10. Note that the example shown in Fig. 10 shows a selection window for setting digest component information that is more detailed than those shown in Fig. 9, for example, individual fields (From:, To:, and Subject:) in the header. When the information to be requested as the digest information is chosen and set based on the instruction from the user, the control unit 214 stores the setting information in the setting holding unit 63a in accordance with the set information.

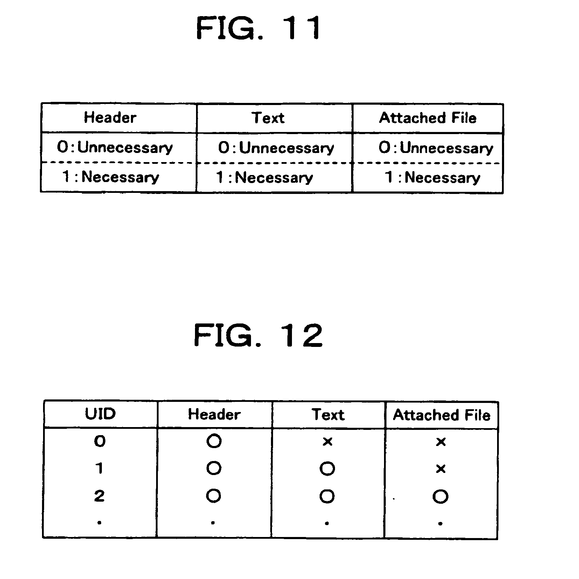

In order to automatically acquire the predetermined partial message depending on the digest information acquired from the mail server 20, for example, the control unit 214 refers to setting information (i.e., the reception item information) which indicates the part to be automatically received in the manner shown in Fig. 11; and then it requests the mail server 20 to transmit each part of the message. When the size of the entire message is equal to or smaller than the upper limit size (for example, 15 k bytes) receivable by the normal mail processing unit 210 in one time, the transmission of the whole message may be requested of the mail server 20 in summarized. In this case, for example, the system is composed so as to switch for the control unit 214 depending on the setting of the flag which representing whether the operation is validated or not, when the size of the entire message is equal to or smaller than the upper limit size receivable in one time, in addition to the setting information shown in Fig. 11.

Alternatively, the management table holding unit 63bc holds the management table representing the received parts of each message, for example, as shown in Fig. 12. The control unit 214 makes the message acquisition unit 212 to acquire necessary parts of the message in accordance with the management table, and the instruction from the user or the setting information shown in Figs. 9 and 11.

### (Manual Reception Operation)

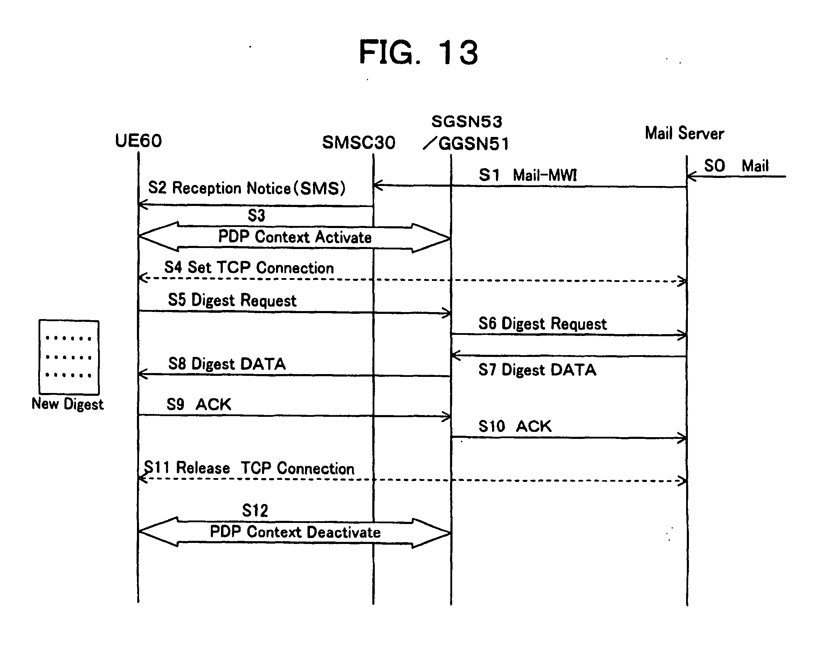

When the flag representing "manual/auto" (see Fig. 9) in the operation mode information is set to "manual", the mail server 20 sends the notice (Mail-MWI) representing the reception of the message to the SMSC 30 (S1), depending on the reception of the message from outside by the mail server 20 as shown in Fig. 13. The SMSC 30 received the notice transmits the reception notice (the short message: SMS) to the cellular phone (UE) 60 of the user as the destination of the message (S2).

The reception notice from the SMSC 30 is provided to the digest acquisition unit 211 through both of the communication control unit 100 and SMS processing unit 220 of the cellular phone (UE) 60. In response to this, the digest acquisition unit 211 executes processing such as radio channel setting and authentication to set a packet session (S3). Then, it also sets TCP connection with respect to the mail server 20 (S4). After that, the digest acquisition unit 211 requests the digest information of the proxy server 22 (S5 and S6). As described above, this digest request is taken the digest component information for designating the information that is necessary as the digest information as parameters.

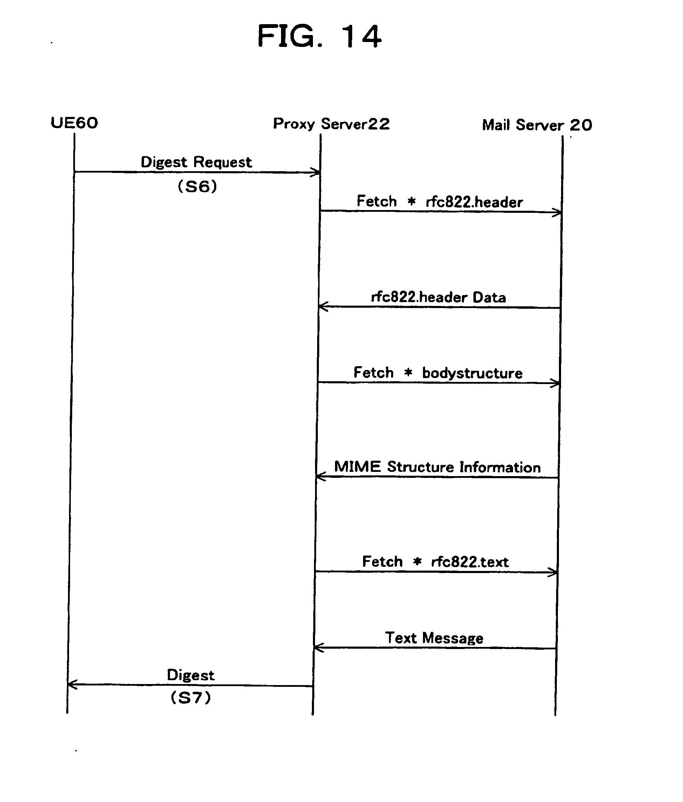

When the digest request is received, the message acquisition unit 22c of the proxy server 22 generates the IMAP command corresponding to the digest request from the digest acquisition unit 211 and provides the generated command to the IMAP4 server 21, as shown in Fig. 14. In response to the command, the IMAP4 server 21 acquires each part of the message in the mbox 10. Then, the message analysis unit 22d analyzes the data of each part provided from the message acquisition unit 22c and makes the response generation unit 22e to generate the digest information (the digest DATA) corresponding to the digest request to transmit to the cellular phone (UE) 60 through the transceiving unit 22a (S7 and S8 shown in Fig. 13). The digest acquisition unit 211 receives the digest information from the proxy server 22 and provides the received digest information to the management table holding unit 63bc.

The digest acquisition unit 211 transmits the response representing reception of the digest DATA (ACK) to the mail server 20 (S9 and S10), and opens the TCP connection (S11); and then closes the packet session.

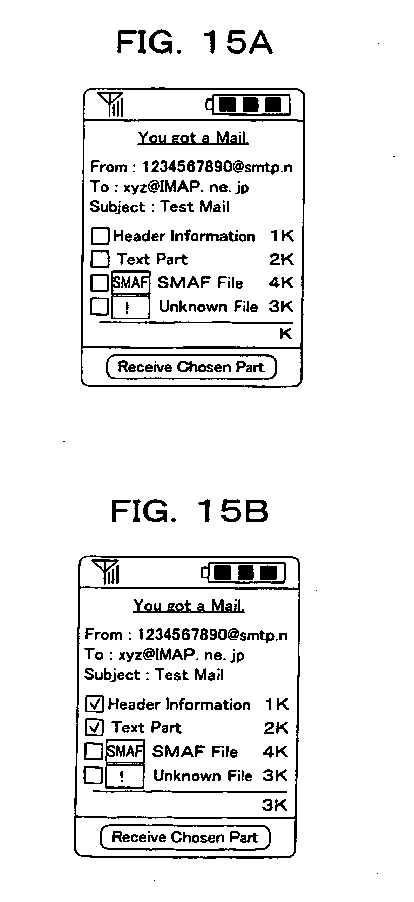

When the digest information is received in the above-mentioned way, the control unit 214 may display the contents of the digest information in accordance with the request from the user. When the instruction from the user is received, the control unit 214 displays the image representing the contents of the received digest information on the display unit 65, for example, as shown in Fig. 15A. In this example, the From field, To field, and Subject field in the header, and the size of each part of the MIME structure are acquired as the digest information.

As shown in Fig. 15B, when the user selects the part to be received from the displayed digest information, the control unit 214 instructs the message acquisition unit 212 to receive the selected part. The received part is stored in the normal message holding unit 63ba. Information representing the received part is registered in the management table in the management table holding unit 63bc.

### (Automatic Reception Operation)

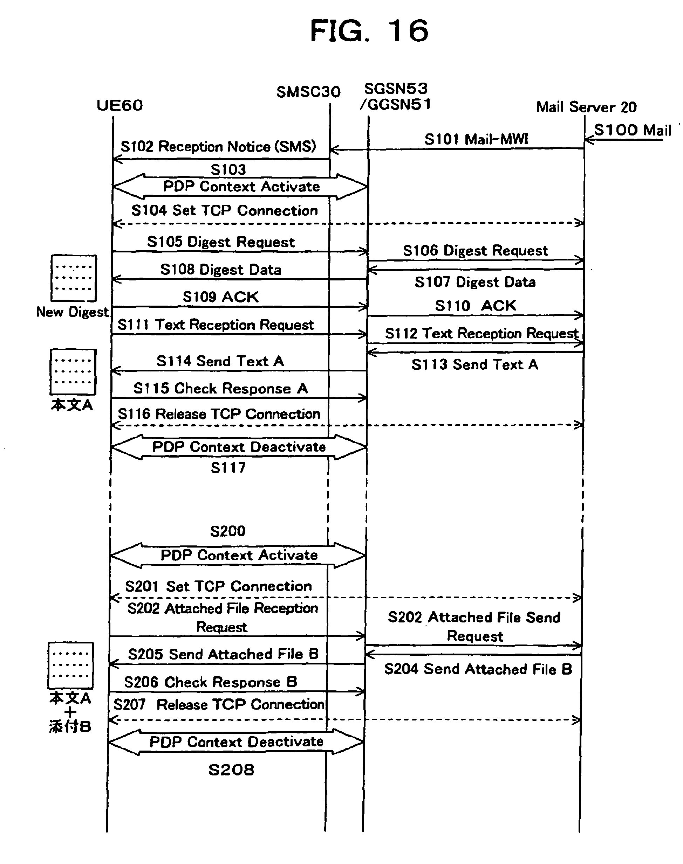

On the other hand, when the flag representing "manual/auto" is set to "auto", as shown in Fig. 16, the mail server 20 notifies that the message from outside (S100) is received to the SMSC 30 of it (S101), in response to the message. Then, the SMSC 30 transmits the reception notice (SMS) to the cellular phone (UE) 60 of the user (S102).

When the reception notice is received, the digest acquisition unit 211 acquires the digest information from the mail server 20, as shown in steps S3 to S10 in Fig. 13 (S103 to S110).

After that, the message acquisition unit 212 acquires the information that is set in the setting table shown in Fig. 11 (for example, the text) from the mail server 20 (S111 to S115). More specifically, after receiving the digest information, the message acquisition unit 212 requests the text of the message of the mail server 20 in accordance with an instruction from the control unit 214 (S111 and S112). In response to the request, when the text (the text A) of the message provided from the mail server 20 is received (S113 and S114), the message acquisition unit 212 stores the received text A in the area assigned to the message in the normal message holding unit 63ba and registers the information representing reception of the text in correspondence with the UID of the message in the management table.

Alternatively, the message acquisition unit 212 transmits the response (the check response A) representing reception of the text A (S115), closes the TCP session (S116), and closes the packet session (S117).

Then, the message acquisition unit 212 sets the packet session and TCP connection again (S200 and S201) and transmits the request of transmission of the remaining parts (for example, the attached file) from the mail server (S202 and S203) to the mail server 20. In response to this, when the attached file (the attached file B) is provided from the mail server 20 (S204 and S205), the message acquisition unit 212 stores the received attached file B in the area assigned to the message in the normal message holding unit 63ba and registers information representing reception of the attached file in correspondence with the UID of the message in the management table.

The message acquisition unit 212 transmits the response (the check response B) representing reception of the attached file B (S206), closes the TCP session (S207), and closes the packet session (S208).

With this operation, even the message beyond the upper limit size of one message may be received as parts in accordance with digest information.

In IMAP, even the partially received message as described above, is stored in the mbox 10 unless the deletion instruction is issued. Therefore, the deletion instruction is issued appropriately. For example, the cellular phone 60 may send the deletion instruction for the part for each part transmission request. Deletion of the whole message may be instructed when the final transmission request for desired parts is sent. The cellular phone 60 may instruct to delete the whole message in requesting the whole message.

Note that in receiving each part, the predetermined part (for example, the text of the message) may be received automatically after the digest information is received, and other parts (for example, the attached file) may be received in accordance with timer setting or the instruction from the user. Since the part to be received automatically may be decided based on the digest information, the designation of the part may be the predetermined part (for example, only the text) or the part having the predetermined format or the predetermined size or the less.

With this, the attached file such as the image data with the large size may be received in a time period such as midnight when the traffic is relatively right by appropriately setting the timer. With this setting, traffic concentration can be relaxed.

Alternatively, setting may be done such that the attached file with the large size is received not by the message acquisition unit 212 but by other terminals such as the PC 70 which is connected to the network 1 and has relatively unlimited transmission rate and memory capacity (for example, the personal computer 70 in Fig. 1).

In the above explanations, the received mail is stored in the memory 63 provided in the cellular phone 60. Instead, an interface to connect an external memory may be provided on the cellular phone 60 to directly save received mail in the external memory connected through the interface.

### (Effect)

As described above, in the information communication system, since the cellular phone acquires the digest information in response to the reception notice, the user may select whether the partial message is received or not, depending on in the digest information. For this reason, to transfer the unnecessary message or unnecessary part to the cellular phone may be avoided, and the increase in traffic may be suppressed. As a result, any heavy traffic in the transmission path may be avoided.

In addition, the reception may be requested for each part of the message. Even if the message that is conventionally unreceivable may be received with high possibility by requesting the reception of each part. When the reception of each part is requested automatically for the message beyond the upper limit size of one message, the operation load on the user may be reduced.

### (Modification)

The present invention is not limited to the embodiment, and various changes and modifications can be made.

For example, in the embodiment, the message acquisition unit 22c of the proxy server 22 generates the IMAP command in response to the request from the message acquisition unit 212 of the normal mail processing unit 210 to request the message of the IMAP4 server 21. In contrast, the IMAP4 protocol may be installed in the message acquisition unit 212 to directly generate an IMAP command and transmit it to the IMAP4 server 21.

In this case, the proxy server 22 can be omitted.

In the embodiment described above, the cellular phone is used as the communication terminal. The present invention can also be applied to the mobile communication terminal or the general communication terminal other than the cellular phone, as a matter of course.

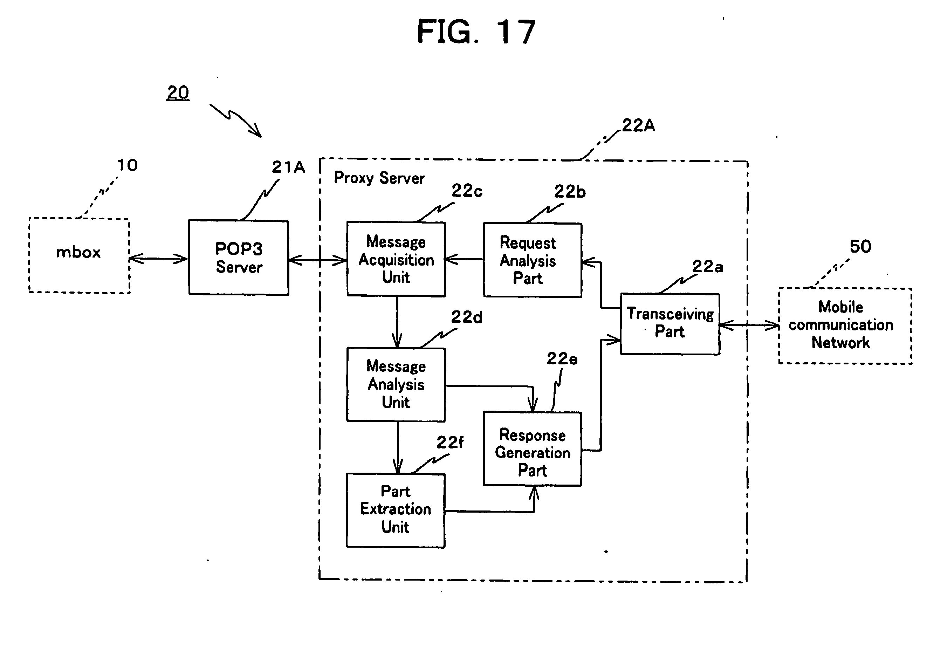

In the embodiment described above, the IMAP4 server 21 is provided in the mail server 20. In place of the IMAP4 server, the POP3 server may be used. In this case, as shown in Fig. 17, the mail server 20 includes the proxy server 22A that extracts the information (or a part of the message) from the message, in which the information is requested as digest information and the message is acquired from the POP3 server 21A. Then, the proxy server 22A transmits the extracted information to the cellular phone 60.

In addition to the components shown in Fig. 2 described above, the proxy server 22A comprises the part extraction unit 22f which extracts requested information or the part of the message in accordance with the analysis result from the message analysis unit 22d.

When the proxy server 22A has the arrangement as described above, the operation such as reception, delete, or transfer can be executed for each part of the message even by using the POP3 server in place of the IMAP server.

In the embodiment described above, regardless of the capacity of the message received by the mail server 20, the reception notice is transmitted by the short message. In response to the notice, the cellular phone 60 acquires digest information and controls message reception in accordance with the digest information. However, when the size of the whole received message (or the message text) is equal to or smaller than the upper limit size of the short message (the reception notice), the whole message (or the message text) may be provided to the cellular phone 60 as the short message.

In this case, when the whole received message (or the message text) is equal to or smaller than the upper limit size of the short message, the mail server 20 provides the whole message (or the message text) to the SMSC 30 and makes it to transmit the message as the short message.

With this arrangement, for the message equal to or smaller than the upper limit size of the short message, the operation of receiving the message wholly or partially in accordance with digest information need not be executed. Hence, the traffic can be reduced.

### INDUSTRIAL APPLICABILITY

As has been explained in detail, the communication method and communication system of the present invention may be applied to communication of the message information such as the e-mail through the communication server.

The communication terminal of the present invention may be applied to the communication terminal, which executes communication of message information such as e-mail.

The communication server of the present invention can be applied to the communication server in the communication system, which executes communication of message information such as e-mail.

## Claims

1. A method of transmitting a message to a communication terminal(60) via a communication server (20), comprising steps of:
receiving the message at the communication server (20), the message comprising a plurality of message information components;
transmitting a reception notice (S102) from the communication server (20) to the communication terminal (60), the reception notice (S102) indicating that message information components to be transmitted to the communication terminal (60) have been received;
transmitting a digest message request (S105) from the communication terminal (60) to the communication server (20) in response to the reception notice (S102), the digestmessage request (S105) comprising parameters specifying the information composition of the requested digest message;
composing the digest message (S107) in the communication server (20) on a basis of the message parameters in the digest message request (S105); and
transmitting the composed digest message (S107) to the communication terminal (60).

2. A mail communication method according to claim 1, wherein the parameters for the requested digest message are pre-set in the communication terminal (60).

3. A mail communication method according to claim 1, wherein prior to the step of transmitting the digest message request (S105), the parameters are specified in accordance with instructions from a user of the communication terminal (60).

4. A mail communication method according to claim 1, further comprising steps of:
after receiving the digest message, transmitting a partial message transmission request (S202) from the communication terminal (60) to the communication server (20), wherein the partial message transmission request (S202) comprises one or more partial designation parameters specifying one or more of the message information components to be received; and
transmitting the one or more message information components (S204) designated by the partial designation parameters, from the communication server (20) to the communication terminal (60) in response to the partial message transmission request (S202).

5. A mail communication method according to claim 4, wherein the partial message transmission request (S202) further comprises a partial message deletion request parameter to request deletion of one or more of the message information components.

6. A mail communication method according to claim 1, further comprising steps of:
transmitting a whole message transmission request to the communication server (20) when a size of the plurality of message information components is smaller than a maximum size receivable by the communication terminal at once;
wherein the whole message transmission request is a transmission request for all of the message information components; and
transmitting all of the message information components from the communication server (20) by the communication server (20), in response to the whole message transmission request.

7. A mail communication method according to claim 6, wherein the whole message transmission request further comprises a whole message deletion request parameter to request deletion of all of the message information components.

8. A communication terminal(60) for receiving message information components from a message via a communication server (20), comprising:
digest message parameter storage means for storing digest message parameters for specifying the information composition of a digest message;
reception notice receiving means for receiving a reception notice (S102) from the communication server (20), the reception notice (S102) representing the message information components to be transmitted to the communication terminal (60);
digest message request means for transmitting a digest message request (S105) to the communication server (20), the digest message request (S105) comprising one or more digest message parameters; and
digest message reception means for receiving digest message transmitted from the communication server(20) in response to the digest message request (S105).

9. A communication terminal (60) according to claim 8, further comprising digest display means for displaying the received digest message.

10. A communication terminal (60) according to claim 9, further comprising:
partial message request means for transmitting a partial message transmission request (S202) to the communication server (20) in accordance with instructions from a user who has seen the digest message displayed on the digest display means, wherein the partial message transmission request (S202) including one or more partial designation parameters specifying one or more of the message information components to be received; and
message reception means for receiving the one or more message information components transmitted from the communication server (20) in response to the partial message transmission request(S202).

11. A communication terminal (60) according to claim 8, further comprising:
partial designation information storage means for storing partial designation information to designate at least one partial component of the message information components required to be received when the partial designation information is present in the message information components;
partial message request means for transmitting the partial message transmission request (S202) to the communication server (20) based on both of the partial designation information and the digest message in each partial component of the message information components required to be received,
wherein the partial message transmission request (S202) is accompanied by a partial designation parameter; and
message reception means for receiving the partial component of the message information component transmitted from the communication server (20) in response to the partial message transmission request (S202).

12. A communication terminal (60) according to claim 8, further comprising:
whole message transmission request means for transmitting a whole message transmission request to the communication server (20) when a size of the plurality of message information components is smaller than a maximum size receivable at once, wherein the whole message transmission request is a transmission request for all of the message information components; and
message reception means for receiving the all of the message information components transmitted from the communication server (20) in response to the whole message transmission request.

13. A communication terminal (60) according to any one of claims 8 to 12, further comprising wireless communication means for executing wireless communication with base stations of a mobile communication network, wherein the base stations are arranged in a communication path to the communication server (20).

14. A communication server (20) for assisting communication by a communication terminal (60), comprising:
receiving means for receiving a message, the message comprising a plurality of message information components;
reception notice means for transmitting a reception notice (S102) to the communication terminal (60), wherein the reception notice (S102) indicating that message information components to be transmitted to the communication terminal (60) have been received;
digest message creation means for composing a digest message on a basis of message parameters in a received digest message request transmitted from the communication terminal (60) and transmitting the composed digest message to the communication terminal (60); and
transmitting means for transmitting the composed digest message to the communication terminal (60).

15. A communication server (20) according to claim 14, further comprising partial message transmission means for transmitting one or more of the message information components to the communication terminal (60) in response to a partial message transmission request (S202) transmitted from the communication terminal (60);
wherein, the message information components are designated by partial designation parameters, in the partial message transmission request (S202).

16. A communication server (20) according to claim 15, further comprising partial message deletion means for deleting one or more of the message information components, when the partial message transmission request (S202) further includes a partial message deletion parameter to request deletion of the message information components designated by the partial designation parameter.

17. A communication server (20) according to claim 15, further comprising whole message transmission means for transmitting all of the message information components in response to a whole message transmission request transmitted from the communication terminal (60).

18. A communication system for executing communication by a communication terminal (60) via a communication server (20),
wherein the communication terminal(60) comprises:
digest message parameter storage means for storing digest message parameters for specifying the information composition of a digest message;
reception notice receiving means for receiving a reception notice (S102) from the communication server (20), the reception notice (S102) representing the message information components to be transmitted to the communication terminal (60);
digest message request means for transmitting a digest message request (S105) to the communication server (20), in response to the reception notice (S102) of the message information, which is sent from the communication server (20), to be transmitted to the communication terminal (60), the digest message request (S105) comprising one or more digest message parameters; and
digest message reception means for receiving the digest message transmitted from the communication server (20) and
the communication server (20) comprises:
receiving means for receiving a message, the message comprising a plurality of message information components;
reception notice (S102) means for transmitting a reception notice (S102) to the communication terminal(60), the reception notice (S102) indicating that the message information components to be transmitted to the communication terminal(60) have been received; and
digest message creation means for composing the digest message on a basis of the message parameters in the received digest message request (S105) transmitted from the communication terminal (60).

## Patentansprüche

1. Verfahren zum Senden einer Nachricht zu einem Kommunikationsendgerät (60) über einen Kommunikationsserver (20), das die folgenden Schritte beinhaltet:
Empfangen der Nachricht an dem Kommunikationsserver (20), wobei die Nachricht mehrere Nachrichteninformationskomponenten beinhaltet;
Senden einer Empfangsbestätigung (S 102) vom Kommunikationsserver (20) zum Kommunikationsendgerät (60), wobei die Empfangsbestätigung (S 102) anzeigt, dass zum Kommunikationsendgerät (60) zu sendende Nachrichteninformationskomponenten empfangen wurden;
Senden einer Zusammenfassungsnachrichtenanforderung (S105) vom Kommunikationsendgerät (60) zum Kommunikationsserver (20) als Reaktion auf die Empfangsbestätigung (S 102), wobei die Zusammenfassungsnachrichtenanforderung (S 105) Parameter beinhaltet, die die Informationszusammensetzung der angeforderten Zusammenfassungsnachricht angeben;
Erstellen der Zusammenfassungsnachricht (S 107) im Kommunikationsserver (20) auf der Basis der Nachrichtenparameter in der Zusammenfassungsnachrichtenanforderung (S 105); und
Senden der erstellten Zusammenfassungsnachricht (S107) zum Kommunikationsendgerät (60).

2. Mailkommunikationsverfahren nach Anspruch 1, wobei die Parameter für die angeforderte Zusammenfassungsnachricht im Kommunikationsendgerät (60) voreingestellt werden.

3. Mailkommunikationsverfahren nach Anspruch 1, wobei vor dem Schritt des Sendens der Zusammenfassungsnachrichtenanforderung (S105) die Parameter gemäß Anweisungen von einem Benutzer des Kommunikationsendgeräts (60) vorgegeben werden.

4. Mailkommunikationsverfahren nach Anspruch 1, das ferner die folgenden Schritte beinhaltet:
Senden, nach dem Empfang der Zusammenfassungsnachricht, einer Teilnachrichtensendeanforderung (S202) vom Kommunikationsendgerät (60) zum Kommunikationsserver (20), wobei die Teilnachrichtensendeanforderung (S202) einen oder mehrere Teildesignierungsparameter beinhaltet, die eine oder mehrere der zu empfangenden Nachrichteninfonnationskomponenten vorgeben; und
Senden der von den Teildesignierungsparametern designierten ein oder mehreren Nachrichteninformationskomponenten (S204) vom Kommunikationsserver (20) zum Kommunikationsendgerät (60) als Reaktion auf die Teilnachrichtensendeanforderung (S202).

5. Mailkommunikationsverfahren nach Anspruch 4, wobei die Teilnachrichtensendeanforderung (S202) ferner einen Teilnachricht-Löschanforderungsparameter zum Anfordern des Löschens von einer oder mehreren der Nachrichteninformationskomponenten beinhaltet.

6. Mailkommunikationsverfahren nach Anspruch 1, das ferner die folgenden Schritte beinhaltet:
Senden einer Vollnachrichtensendeanforderung zum Kommunikationsserver (20), wenn die Größe der meisten Nachrichteninformationskomponenten geringer ist als eine maximale Größe, die von dem Kommunikationsendgerät auf einmal empfangen werden kann;
wobei die Vollnachrichtensendeanforderung eine Sendeanforderung für alle Nachrichteninformationskomponenten ist; und
Senden aller Nachrichteninformationskomponenten vom Kommunikationsserver (20) durch den Kommunikationsserver (20) als Reaktion auf die Vollnachrichtensendeanforderung.

7. Mailkommunikationsverfahren nach Anspruch 6, wobei die Vollnachrichtensendeanforderung ferner einen Vollnachricht-Löschanforderungsparameter zum Anfordern des Löschens aller Nachrichteninformationskomponenten beinhaltet.

8. Kommunikationsendgerät (60) zum Empfangen von Nachrichteninformationskomponenten von einer Nachricht über einen Kommunikationsserver (20), das Folgendes umfasst:
Zusammenfassungsnachrichtenparameter-Speichermittel zum Speichern von Zusammenfassungsnachrichtenparametern zum Vorgeben der Informationszusammensetzung einer Zusammenfassungsnachricht;
Empfangsbestätigungsempfangsmittel zum Empfangen einer Empfangsbestätigung (S 102) vom Kommunikationsserver (20), wobei die Empfangsbestätigung (S102) die zum Kommunikationsendgerät (60) zu sendenden Nachrichteninformationskomponenten repräsentiert;
Zusammenfassungsnachrichtenanforderungsmittel zum Senden einer Zusammenfassungsnachrichtenanforderung (S105) zum Kommunikationsserver (20), wobei die Zusammenfassungsnachrichtenanforderung (S 105) einen oder mehrere Zusammenfassungsnachrichtenparameter beinhaltet; und
Zusammenfassungsnachrichtenempfangsmittel zum Empfangen einer vom Kommunikationsserver (20) gesendeten Zusammenfassungsnachricht als Reaktion auf die Zusammenfassungsnachrichtenanforderung (S105).

9. Kommunikationsendgerät (60) nach Anspruch 8, das ferner Zusammenfassungsanzeigemittel zum Anzeigen der empfangenen Zusammenfassungsnachricht umfasst.

10. Kommunikationsendgerät (60) nach Anspruch 9, das ferner Folgendes umfasst:
Teilnachrichtenanforderungsmittel zum Senden einer Teilnachrichtensendeanforderung (S202) zum Kommunikationsserver (20) gemäß Anweisungen von einem Benutzer, der die auf dem Zusammenfassungsanzeigemittel angezeigte Zusammenfassungsnachricht gesehen hat, wobei die Teilnachrichtensendeanforderung (S202) einen oder mehrere Teildesignierungsparameter beinhaltet, die eine oder mehrere der zu empfangenden Nachrichteninformationskomponenten vorgeben; und
Nachrichtenempfangsmittel zum Empfangen der einen oder mehreren Nachrichteninformationskomponenten, die vom Kommunikationsserver (20) als Reaktion auf die Teilnachrichtensendeanforderung (S202) gesendet wurden.

11. Kommunikationsendgerät (60) nach Anspruch 8, das ferner Folgendes umfasst:
Teildesignierungsinformationen-Speichermittel zum Speichern von Teildesignierungsinformationen zum Designieren von wenigstens einer Teilkomponente der Nachrichteninformationskomponenten, die empfangen werden sollen, wenn die Teildesignierungsinformationen in den Nachrichteninformationskomponenten vorhanden sind;
Teilnachrichtenanforderungsmittel zum Senden der Teilnachrichtensendeanforderung (S202) zum Kommunikationsserver (20) auf der Basis der Teildesignierungsinformationen und der Zusammenfassungsnachricht in jeder Teilkomponente der Nachrichteninformationskomponenten, die empfangen werden sollen,
wobei die Teilnachrichtensendeanforderung (S202) von einem Teildesignierungsparameter begleitet wird; und
Nachrichtenempfangsmittel zum Empfangen der Teilkomponente der Nachrichteninformationskomponente, die vom Kommunikationsserver (20) als Reaktion auf die Teilnachrichtensendeanforderung (S202) gesendet wird.

12. Kommunikationsendgerät (60) nach Anspruch 8, das ferner Folgendes umfasst:
Vollnachrichtensendeanforderungsmittel zum Senden einer Vollnachrichtensendeanforderung zum Kommunikationsserver (20), wenn die Größe der mehreren Nachrichteninformationskomponenten geringer ist als eine maximale Größe, die auf einmal empfangen werden kann, wobei die Vollnachrichtensendeanforderung eine Sendeanforderung für alle Nachrichteninformationskomponenten ist; und
Nachrichtenempfangsmittel zum Empfangen aller Nachrichteninformationskomponenten, die vom Kommunikationsserver (20) als Reaktion auf die Vollnachrichtensendeanforderung gesendet werden.

13. Kommunikationsendgerät (60) nach einem der Ansprüche 8 bis 12, das ferner Funkkommunikationsmittel zum Durchführen von Funkkommunikationen mit Basisstationen eines Mobilfunkkommunikationsnetzes umfasst, wobei die Basisstationen auf einem Kommunikationspfad zum Kommunikationsserver (20) angeordnet sind.

14. Kommunikationsserver (20 zum Assistieren bei der Kommunikation durch ein Kommunikationsendgerät (60), der Folgendes umfasst:
Empfangsmittel zum Empfangen einer Nachricht, wobei die Nachricht mehrere Nachrichteninformationskomponenten beinhaltet;
Empfangsbestätigungmittel zum Senden einer Empfangsbestätigung (102) zum Kommunikationsendgerät (60), wenn die Empfangsbestätigung (S 102) anzeigt, dass zum Kommunikationsendgerät (60) zu sendende Nachrichteninformationskomponenten empfangen wurden;
Zusammenfassungsnachrichtenerzeugungsmittel zum Erstellen einer Zusammenfassungsnachricht auf der Basis von Nachrichtenparametern in einer vom Kommunikationsendgerät (60) gesendeten empfangenen Zusammenfassungsnachrichtenanforderung und zum Senden der erstellten Zusammenfassungsnachricht zum Kommunikationsendgerät (60); und
Sendemittel zum Senden der erstellten Zusammenfassungsnachricht zum Kommunikationsendgerät (60).

15. Kommunikationsserver (20) nach Anspruch 14, der ferner Teilnachrichtensendemittel zum Senden von einer oder mehreren der Nachrichteninformationskomponenten zum Kommunikationsendgerät (60) als Reaktion auf die vom Kommunikationsendgerät (60) gesendete Teilnachrichtensendeanforderung (S202) umfasst;
wobei die Nachrichteninformationskomponenten durch Teildesignierungsparameter in der Teilnachrichtensendeanforderung (S202) designiert werden.

16. Kommunikationsserver (20) nach Anspruch 15, der ferner Teilnachrichtenlöschmittel zum Löschen von einer oder mehreren der Nachrichteninformationskomponenten umfasst, wenn die Teilnachrichtensendeanforderung (S202) ferner einen Teilnachrichtenlöschparameter zum Anfordern des Löschens der von dem Teildesignierungsparameter designierten Nachrichteninformationskomponenten beinhaltet.

17. Kommunikationsserver (20) nach Anspruch 15, der ferner Vollnachrichtensendemittel zum Senden aller Nachrichteninformationskomponenten als Reaktion auf eine vom Kommunikationsendgerät (60) gesendete Vollnachrichtensendeanforderung umfasst.

18. Kommunikationssystem zum Ausführen von Kommunikationen durch ein Kommunikationsendgerät (60) über einen Kommunikationsserver (20), wobei das Kommunikationsendgerät (60) Folgendes umfasst:
Zusammenfassungsnachrichtenparameter-Speichermittel zum Speichern von Zusammenfassungsnachrichtenparametern zum Vorgeben der Informationszusammensetzung einer Zusammenfassungsnachricht;
Empfangsbestätigungsempfangsmittel zum Empfangen einer Empfangsbestätigung (S 102) vom Kommunikationsserver (20), wobei die Empfangsbestätigung (S 102) die zum Kommunikationsendgerät (60) zu sendenden Nachrichteninformationskomponenten repräsentiert;
Zusammenfassungsnachrichtenanforderungsmittel zum Senden einer Zusammenfassungsnachrichtenanforderung (S105) zum Kommunikationsserver (20) als Reaktion auf die Empfangsbestätigung (S 102) der vom Kommunikationsserver (20) gesendeten Nachrichteninformationen, die zum Kommunikationsendgerät (60) gesendet werden sollen, wobei die Zusammenfassungsnachrichtenanforderung (S105) einen oder mehrere Zusammenfassungsnachrichtenparameter beinhaltet; und
Zusammenfassungsnachrichtenempfangsmittel zum Empfangen der vom Kommunikationsserver (20) gesendeten Zusammenfassungsnachricht, wobei der Kommunikationsserver (20) Folgendes umfasst:
Empfangsmittel zum Empfangen einer Nachricht, wobei die Nachricht mehrere Nachrichteninformationskomponenten beinhaltet;
Empfangsbestätigungmittel (S 102) zum Senden einer Empfangsbestätigung (102) zum Kommunikationsendgerät (60), wobei die Empfangsbestätigung (S102) anzeigt, dass die zum Kommunikationsendgerät (60) zu sendenden Nachrichteninformationskomponenten empfangen wurden; und
Zusammenfassungsnachrichtenerzeugungsmittel zum Erstellen der Zusammenfassungsnachricht auf der Basis der Nachrichtenparameter in der vom Kommunikationsendgerät (60) gesendeten empfangenen Zusammenfassungsnachrichtenanforderung (S 105).

## Revendications

1. Procédé de transmission d'un message à un terminal de communication (60) via un serveur de communication (20), comprenant les étapes consistant à :
recevoir le message au niveau du serveur de communication (20), le message comprenant une pluralité de composants d'information de message ;
transmettre un avis de réception (S102) à partir du serveur de communication (20) vers le terminal de communication (60), l'avis de réception (S102) indiquant que les composants d'information de message à transmettre au terminal de communication (60) ont été reçus ;
transmettre une demande de condensé de messages (S105) à partir du terminal de communication (60) vers le serveur de communication (20) en réaction à l'avis de réception (S 102), la demande de condensé de messages (S105) comportant des paramètres lesquels spécifient la composition des informations du message condensé demandé ;
composer le message condensé (S107) dans le serveur de communication (20) sur la base des paramètres de message se trouvant dans la demande de condensé de messages (S105) ; et
transmettre le message condensé composé (S 107) au terminal de communication (60).

2. Procédé de communication par courriel selon la revendication 1, les paramètres pour le message condensé demandé étant prédéfinis dans le terminal de communication (60).

3. Procédé de communication par courriel selon la revendication 1, avant l'étape de transmission de la demande de condensé de messages (S105), les paramètres étant spécifiés en conformité avec les instructions provenant d'un utilisateur du terminal de communication (60).

4. Procédé de communication par courriel selon la revendication 1, comprenant en outre les étapes consistant à :
après la réception du message condensé, transmettre une demande de transmission de message partiel (S202) à partir du terminal de communication (60) vers le serveur de communication (20), alors que la demande de transmission de message partiel (S202) comporte un ou plusieurs paramètres de désignation partielle , lesquels spécifient un ou plusieurs des composants d'information de message devant être reçus ; et
transmettre ledit un ou plusieurs composants d'information de message (S204), désignés par les paramètres de désignation partielle, à partir du serveur de communication (20) vers le terminal de communication (60) en réaction à la demande de transmission de message partiel (S202).

5. Procédé de communication par courriel selon la revendication 4, la demande de transmission de message partiel (S202) comprenant en outre un paramètre de demande de suppression de message partiel afin de demander la suppression d'un ou plusieurs des composants d'information de message.

6. Procédé de communication par courriel selon la revendication 1, comprenant en outre les étapes consistant à :
transmettre une demande de transmission du message tout entier au serveur de communication (20) lorsqu'une taille de la pluralité des composants d'information de message est plus faible qu'une taille maximale recevable instantanément par le terminal de communication ;
la demande de transmission du message tout entier étant une demande de transmission pour la totalité des composants d'information de message ; et
faire transmettre, par le serveur de communication (20), la totalité des composants d'information de message à partir du serveur de communication (20), en réaction à la demande de transmission du message tout entier.

7. Procédé de communication par courriel selon la revendication 6, la demande de transmission du message tout entier comprenant en outre un paramètre de demande de suppression du message tout entier afin de demander la suppression de la totalité des composants d'information de message.

8. Terminal de communication (60) pour recevoir des composants d'information de message à partir d'un message via un serveur de communication (20), comprenant :
des moyens de stockage de paramètres de message condensé pour stocker les paramètres de message condensé lesquels spécifient la composition des informations d'un message condensé ;
des moyens de réception d'avis de réception pour recevoir un avis de réception (S102) provenant du serveur de communication (20), l'avis de réception (S 102) représentant les composants d'information de message à transmettre au terminal de communication (60) ;
des moyens de demande de condensé de messages pour transmettre une demande de condensé de messages (S105) au serveur de communication (20), la demande de condensé de messages (S105) comportant un ou plusieurs paramètres de message condensé ; et
des moyens de réception de condensé de messages pour recevoir un message condensé transmis à partir du serveur de communication (20) en réaction à la demande de condensé de messages (S105).

9. Terminal de communication (60) selon la revendication 8, comprenant en outre des moyens d'affichage condensé pour afficher le message condensé reçu.

10. Terminal de communication (60) selon la revendication 9, comprenant en outre :
des moyens de demande de messages partiels pour transmettre une demande de transmission de message partiel (S202) au serveur de communication (20) conformément aux instructions émanant d'un utilisateur qui a consulté le message condensé affiché sur les moyens d'affichage condensé, cas dans lequel la demande de transmission de message partiel (S202) englobe un ou plusieurs paramètres de désignation partielle lesquels spécifient un ou plusieurs des composants d'information de message devant être reçus ; et
des moyens de réception de messages pour recevoir ledit un ou plusieurs composants d'information de message transmis à partir du serveur de communication (20) en réaction à la demande de transmission de message partiel (S202).

11. Terminal de communication (60) selon la revendication 8, comprenant en outre :
des moyens de stockage d'informations de désignation partielle pour stocker des informations de désignation partielle afin de désigner au moins un composant partiel parmi les composants d'information de message dont la réception est requise lorsque les informations de désignation partielle sont présentes dans les composants d'information de message ;
des moyens de demande de messages partiels pour transmettre la demande de transmission de message partiel (S202) au serveur de communication (20) sur la base à la fois des informations de désignation partielle et du message condensé dans chaque composant partiel parmi les composants d'information de message dont la réception est requise,
cas dans lequel la demande de transmission de message partiel (S202) est accompagnée d'un paramètre de désignation partielle ; et
des moyens de réception de message pour recevoir le composant partiel parmi les composants d'information de message transmis à partir du serveur de communication (20) en réaction à la demande de transmission de message partiel (S202).

12. Terminal de communication (60) selon la revendication 8, comprenant en outre :
des moyens de demande de transmission du message tout entier pour transmettre une demande de transmission du message tout entier au serveur de communication (20) lorsqu'une taille de la pluralité des composants d'information de message est plus faible qu'une taille maximale recevable instantanément, cas dans lequel la demande de transmission du message tout entier est une demande de transmission pour la totalité des composants d'information de message ; et
des moyens de réception de messages pour recevoir la totalité des composants d'information de message transmis à partir du serveur de communication (20) en réaction à la demande de transmission du message tout entier.

13. Terminal de communication (60) selon l'une quelconque des revendications 8 à 12, comprenant en outre des moyens de communication sans fil pour exécuter les communications sans fil avec les stations de base d'un réseau de communications mobiles, cas dans lequel les stations de base sont agencées suivant un trajet de communication jusqu'au serveur de communication (20).

14. Serveur de communication (20) destiné à aider les communications faites par un terminal de communication (60), comprenant :
des moyens de réception pour recevoir un message, le message comportant une pluralité de composants d'information de message ;
des moyens de réception d'avis pour transmettre un avis de réception (S102) au terminal de communication (60), l'avis de réception (S102) indiquant que les composants d'information de message à transmettre au terminal de communication (60) ont été reçus ;
des moyens de création de condensé de messages pour composer un message condensé sur la base des paramètres de message se trouvant dans une demande de condensé de messages reçue transmise à partir du terminal de communication (60), et pour transmettre le message condensé composé au terminal de communication (60) ; et
des moyens de transmission pour transmettre le message condensé composé au terminal de communication (60).

15. Serveur de communication (20) selon la revendication 14, comprenant en outre des moyens de transmission de messages partiels pour transmettre un ou plusieurs des composants d'information de message au terminal de communication (60) en réaction à une demande de transmission de message partiel (S202) transmise à partir du terminal de communication (60) ;
les composants d'information de message étant désignés par des paramètres de désignation partielle dans la demande de transmission de message partiel (S202).

16. Serveur de communication (20) selon la revendication 15, comprenant en outre des moyens de suppression de messages partiels afin de supprimer un ou plusieurs des composants d'information de message, lorsque la demande de transmission de message partiel (S202) englobe en outre un paramètre de suppression de message partiel afin de demander la suppression des composants d'information de message désignés par le paramètre de désignation partielle.

17. Serveur de communication (20) selon la revendication 15, comprenant en outre des moyens de transmission du message tout entier pour transmettre la totalité des composants d'information de message en réaction à une demande de transmission du message tout entier transmise à partir du terminal de communication (60).

18. Système de communication pour assurer l'exécution des communications par un terminal de communication (60) via un serveur de communication (20),
le terminal de communication (60) comprenant :
des moyens de stockage de paramètres de condensé de messages pour stocker les paramètres de message condensé lesquels spécifient la composition des informations d'un message condensé ;
des moyens de réception d'avis de réception pour recevoir un avis de réception (S102) provenant du serveur de communication (20), l'avis de réception (S102) représentant les composants d'information de message à transmettre au terminal de communication (60) ;
des moyens de demande de condensé de messages pour transmettre une demande de condensé de messages (S105) au serveur de communication (20), en réaction à l'avis de réception (S102) des informations de message, qui est envoyé à partir du serveur de communication (20), pour être transmise au terminal de communications (60), la demande de condensé de messages (S105) comportant un ou plusieurs paramètres de message condensé ; et
des moyens de réception de condensé de messages pour recevoir le message condensé transmis à partir du serveur de communication (20), et
le serveur de communication (20) comprenant :
des moyens de réception pour recevoir un message, le message comportant une pluralité de composants d'information de message ;
des moyens de réception d'avis (S102) pour transmettre un avis de réception (S 102) au terminal de communication (60), l'avis de réception (S 102) indiquant que les composants d'information de message à transmettre au terminal de communication (60) ont été reçus ; et
des moyens de création de condensé de messages pour composer le message condensé sur la base des paramètres de message se trouvant dans la demande de condensé de messages reçue (S105) transmise à partir du terminal de communication (60).
